# FASCICULE DE BREVET EUROPEEN

(11) **EP 3 928 034 B1**
(45) Date de publication et mention de la délivrance du brevet: **28.06.2023**
(21) Numéro de dépôt: 20721283.8
(22) Date de dépôt: 19.02.2020
(51) Int. Cl.: F23R 3/28, F16B 5/10, F23R 3/50, F23R 3/60

(54) **CHAMBRE DE COMBUSTION POUR UNE TURBOMACHINE**
BRENNKAMMER FÜR EINE TURBOMASCHINE
COMBUSTION CHAMBER FOR A TURBOMACHINE

(30) Priorité: 19.02.2019 FR 1901635
(43) Date de publication de la demande: 29.12.2021
(73) Titulaire: Safran Aircraft Engines, 75015 Paris (FR)
(72) Inventeur: BUNEL, Jacques, Marcel, Arthur, 77550 Moissy-Cramayel (FR); DOUSSE, William,Louis, Rodolphe, 77550 Moissy-Cramayel (FR); VILLENAVE, Benjamin, Frantz, Karl, 77550 Moissy-Cramayel (FR)
(74) Mandataire: Ernest Gutmann - Yves Plasseraud S.A.S.
(86) Numéro de dépôt international: PCT/FR2020/000037
(87) Numéro de publication internationale: WO 2020/169894

(56) Documents cités:
- WO-A1-2015/092206
- WO-A2-2010/000583
- FR-A1- 3 042 588
- US-A1- 2008 016 874
- US-A1- 2019 003 711

## Description

### Domaine technique de l'invention

L'invention concerne une chambre de combustion pour une turbomachine, telle qu'un turboréacteur ou un turbopropulseur d'avion.

### Etat de la technique antérieure

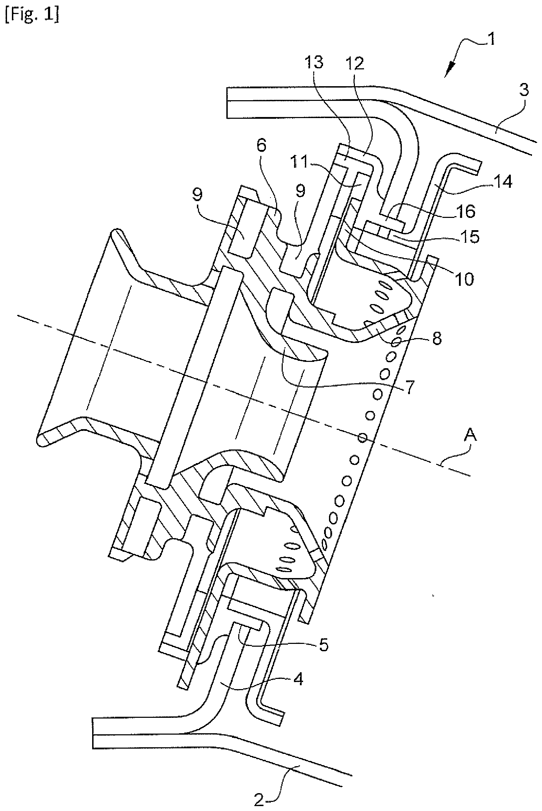

La figure 1 représente une partie d'une chambre de combustion annulaire 1 d'une turbomachine telle qu'un turboréacteur ou un turbopropulseur d'avion, conformément à l'art antérieur.

La chambre de combustion 1 est agencée en sortie d'un diffuseur non représenté, lui-même situé à la sortie d'un compresseur. La chambre 1 comporte une paroi de révolution interne 2 et une paroi de révolution externe 3, reliées en amont par une paroi annulaire de fond de chambre 4.

La paroi de fond de chambre 4 comporte des ouvertures 5 dans lesquelles sont montés des systèmes d'injection 6 d'un mélange d'air et de carburant dans la chambre 1, l'air provenant du diffuseur et le carburant étant amené par des injecteurs (non représentés) régulièrement répartis sur la circonférence de la chambre de combustion 1. Chaque injecteur comprend une tête d'injection de carburant aligné sur l'axe A de l'ouverture 5 correspondante.

Une partie du débit d'air fourni par le compresseur et sortant du diffuseur alimente des conduits annulaires interne et externe de contournement de la chambre de combustion. L'autre partie du débit d'air pénètre dans les système d'injection et est ensuite mélangée au carburant amené par les injecteurs avant d'être pulvérisée dans la chambre de combustion 1.

Pour chaque système d'injection 6, un injecteur de carburant central est entouré par une paroi annulaire 7 dudit système d'injection 6 formant un venturi. Un bol 8 entoure la paroi annulaire, ledit bol 8 s'évasant vers l'aval. Le système d'injection 6 comporte classiquement des ailettes 9 destinées à imprimer au flux d'air le traversant un mouvement de giration favorisant l'homogénéisation du mélange d'air et de carburant.

La périphérie radialement externe du bol comporte un rebord radial 10 monté de façon mobile dans une gorge radiale 11 délimitée par un fourreau 12 soudé sur la paroi de fond 4 de la chambre de combustion 1 et par une bague de fermeture 13 soudée au fourreau 12.

Le déplacement radial du rebord 10 dans la gorge 11 permet de compenser les déplacements relatifs entre les injecteurs et le carter de la turbomachine sur lequel ils sont fixés, d'une part, et la chambre de combustion 1, d'autre part. De tels déplacements apparaissent en fonctionnement en raison des dilatations différentielles entre les divers éléments de la turbomachine.

Un déflecteur 14 est par ailleurs monté en aval de la paroi de fond 4, le déflecteur 14 comportant une partie cylindrique 15 montée à l'intérieur d'une partie cylindrique 16 du fourreau 12 et fixée par brasage ou soudage à ladite partie cylindrique 16 du fourreau 12.

Il existe un risque que le déflecteur 14 se détache du fourreau 12, et provoque un endommagement des éléments situés en aval, notamment la turbine.

Le document US 2019/003711 A1 divulgue une chambre de combustion de l'art antérieur. L'invention vise à éviter un tel endommagement, de manière simple, fiable et peu onéreuse.

### Présentation de l'invention

A cet effet, l'invention concerne une chambre de combustion de turbomachine, comportant
- une paroi de fond comportant au moins une ouverture,
- au moins un fourreau monté en amont de la paroi de fond et fixé à la paroi de fond,
- une bague de fermeture délimitant une gorge annulaire avec le fourreau et fixée au fourreau,
- au moins un système d'injection d'air et de carburant, présentant un axe, monté dans l'ouverture de la paroi de fond, le système d'injection comprenant un rebord annulaire s'étendant radialement par rapport audit axe, monté dans ladite gorge avec un jeu radial,
- un déflecteur situé en aval de la paroi de fond, fixé au fourreau et/ou à la paroi de fond, comportant une partie radialement interne située axialement entre la paroi de fond et une extrémité aval du système d'injection, le système d'injection comportant au moins une partie en saillie apte à être introduite dans une partie en creux du déflecteur, ou inversement, dans une première position angulaire de montage du système d'injection par rapport au déflecteur, ladite partie en saillie étant apte à venir axialement en butée sur une face radiale du déflecteur, ou respectivement, du système d'injection, dans une seconde position angulaire de maintien du système d'injection par rapport au déflecteur, ladite partie en saillie étant décalée angulairement de la partie en creux dans ladite seconde position.

Le déflecteur et le système d'injection comportent ainsi un système de type baïonnette permettant le montage de système d'injection dans le déflecteur, dans la première position angulaire, et maintenant axialement le déflecteur par rapport au système d'injection, dans la seconde position angulaire. En cas de séparation du déflecteur, d'une part et du fourreau et/ou de la paroi de fond, d'autre part, le déflecteur reste maintenu axialement par la partie en saille, de façon à ce qu'il n'y ait pas de risque d'endommager des éléments de la turbomachine qui sont situés en aval.

Les termes amont et aval sont définis par rapport au flux de gaz circulant dans la chambre de combustion.

Les termes radial, axial et circonférentiel sont définis par rapport à l'axe du système d'injection.

La chambre de combustion peut comporter des moyens de maintien en position aptes à maintenir le système d'injection dans sa seconde position par rapport au déflecteur

La partie en saillie peut s'étendre radialement depuis l'extrémité aval du système d'injection, la partie en creux étant formée dans le déflecteur.

La partie en saillie est par exemple formé par un ergot ou une patte s'étendant radialement vers l'extérieur. La partie en creux est par exemple formée par une rainure ou une encoche du déflecteur.

Le nombre de parties en saillie et de parties en creux est par exemple égal à trois. Les parties en saillie et en creux peuvent alors être régulièrement réparties sur la circonférence.

Le système d'injection peut comporter une patte de blocage en rotation maintenue ou immobilisée en rotation par des butées circonférentielles du fourreau et/ou de la bague de fermeture.

Le fourreau peut comporter une première butée circonférentielle et une deuxième butée circonférentielle, la patte de blocage en rotation étant apte à venir en appui sur la première butée circonférentielle dans la première position angulaire du système d'injection, la patte de blocage en rotation étant apte à venir en appui sur la deuxième butée circonférentielle dans la seconde position angulaire du système d'injection.

Les butées circonférentielles forment ainsi des butées de fin de course, autorisant et limitant le débattement angulaire du système d'injection par rapport au déflecteur. Une telle structure permet de faciliter le montage de l'ensemble.

La bague de fermeture peut comporter une troisième butée circonférentielle, la patte étant apte à être maintenue en position entre les deuxième et troisième butées circonférentielles, de façon à maintenir le système d'injection dans sa seconde position angulaire.

Les deuxième et troisième butées circonférentielles forment ainsi les moyens de maintien en position précités, avec la patte de maintien en position.

Le fourreau peut comporter une partie cylindrique radialement interne, montée dans l'ouverture de la paroi de fond et fixée à la périphérie de ladite ouverture.

La fixation correspondante est par exemple assurée par brasage ou soudage.

Le déflecteur peut comporter une partie cylindrique montée dans la partie cylindrique radialement interne du fourreau et fixée à ladite partie cylindrique radialement interne.

La fixation correspondante est par exemple assurée par brasage ou soudage.

Le fourreau peut comporter une partie cylindrique radialement externe, située axialement en amont de la partie cylindrique radialement interne, la bague de fermeture étant montée radialement à l'intérieur de la partie cylindrique radialement externe.

La chambre de combustion peut comporter un injecteur comportant une tête d'injection montée dans le système d'injection, le système d'injection comportant des moyens d'amenée d'air et des moyens de formation d'un mélange de l'air avec le carburant issu de l'injecteur. L'invention concerne également une turbomachine comportant une chambre de combustion du type précité.

L'invention concerne de plus un procédé de montage d'une chambre de combustion du type précité, caractérisé en ce qu'il comporte les étapes consistant à :
- fixer le fourreau et le déflecteur sur la paroi de fond,
- positionner le système d'injection dans la première position angulaire et introduire le système d'injection dans l'ouverture de la paroi de fond, au travers du fourreau et du déflecteur, par translation suivant l'axe du système d'injection et de ladite ouverture, la partie en saillie traversant la partie en creux,
- faire pivoter le système d'injection dans sa seconde position angulaire de façon à ce que la partie en saillie soit apte à former une butée axiale avec le déflecteur,
- monter la bague de fermeture de façon à maintenir axialement le rebord annulaire du système d'injection dans la gorge délimitée par la bague de fermeture et le fourreau et immobiliser en rotation le système d'injection,

### Brève description des figures

[Fig. 1] est une vue en coupe d'une partie d'une chambre de combustion selon l'art antérieur,
[Fig. 2] est une vue correspondant à la figure 1, illustrant une chambre de combustion selon une forme de réalisation de l'invention,
[Fig. 3] est une vue en perspective du système d'injection,
[Fig. 4] est une vue en perspective du système d'injection,
[Fig. 5] est une vue en perspective du déflecteur,
[Fig. 6] est une vue en perspective d'une partie de la chambre de combustion selon l'invention, le système d'injection étant dans sa seconde position angulaire par rapport au déflecteur, [Fig. 7] est une vue en perspective illustrant le fourreau, le fond de chambre et le système d'injection, dans la seconde position angulaire du système d'injection,
[Fig. 8] est une vue correspondant à la figure 7, dans laquelle la bague de fermeture a été ajoutée.

### Description détaillée de l'invention

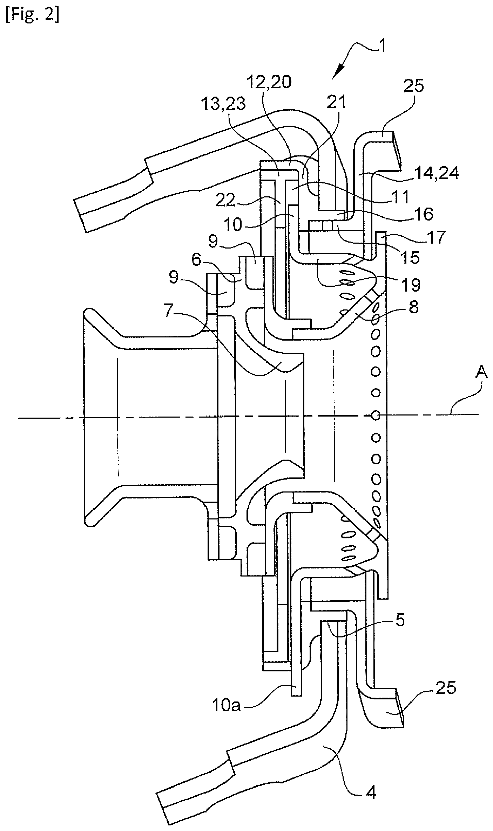

Les figures 2 à 8 illustrent une partie d'une chambre de combustion 1 selon une forme de réalisation de l'invention, destinée à équiper une turbomachine, telle qu'un turboréacteur ou un turbopropulseur d'avion.

La chambre 1 comporte une paroi de révolution interne et une paroi de révolution externe, reliées en amont par une paroi annulaire de fond de chambre 4.

La paroi de fond de chambre 4 comporte des ouvertures 5 dans lesquelles sont montés des systèmes d'injection 6 d'un mélange d'air et de carburant dans la chambre 1, l'air provenant du diffuseur et le carburant étant amené par des injecteurs (non représentés) régulièrement répartis sur la circonférence de la chambre de combustion 1. Chaque injecteur comprend une tête d'injection de carburant aligné sur l'axe A de l'ouverture 5 correspondante.

Une partie du débit d'air fourni par le compresseur et sortant du diffuseur alimente des conduits annulaires interne et externe de contournement de la chambre de combustion. L'autre partie du débit d'air pénètre dans les système d'injection et est ensuite mélangée au carburant amené par les injecteurs avant d'être pulvérisée dans la chambre de combustion 1.

Pour chaque système d'injection 6, un injecteur de carburant central est entouré par une paroi annulaire 7 dudit système d'injection 6 formant un venturi. Un bol 8 entoure la paroi annulaire, ledit bol 8 s'évasant vers l'aval.

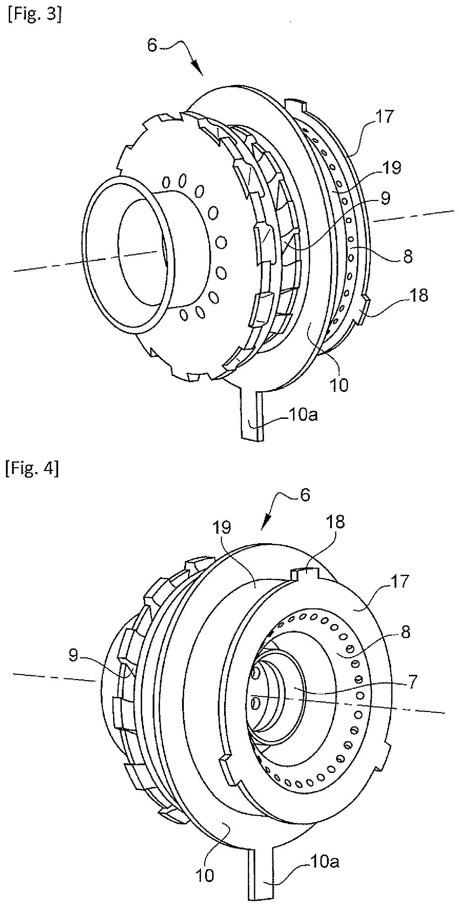

L'extrémité aval du bol 8 comporte un rebord annulaire 17 s'étendant radialement vers l'extérieur. Comme cela est mieux visible aux figures 3 et 4, des ergots ou des pattes 18 s'étendent radialement vers l'extérieur depuis la périphérie radialement externe du rebord annulaire 17. Les ergots sont ici au nombre de trois et sont régulièrement répartis sur la circonférence, c'est-à-dire sont décalés angulairement les uns par rapport aux autre d'un angle de 120°.

Le système d'injection 6 comporte en outre classiquement des ailettes 9 destinées à imprimer au flux d'air entrant par le canal délimité entre le bol 8 et la paroi annulaire un mouvement de giration favorisant l'homogénéisation du mélange d'air et de carburant.

La périphérie radialement externe du bol comporte un rebord radial 10 relié au rebord 17 par une partie cylindrique 19. Le rebord 10 est situé axialement en amont du rebord 17. Le rebord 10 est monté de façon mobile dans une gorge radiale 11 délimitée par un fourreau 12 soudé sur la paroi de fond 4 de la chambre de combustion 1 et par une bague de fermeture 13 soudée au fourreau 12. Le rebord 10 comporte une patte 10a s'étendant radialement vers l'extérieur depuis l'extrémité radialement externe du rebord 10.

Le déplacement radial du rebord 10 dans la gorge 11 permet de compenser les déplacements relatifs entre les injecteurs et le carter de la turbomachine sur lequel ils sont fixés, d'une part, et la chambre de combustion 1, d'autre part. De tels déplacements apparaissent en fonctionnement en raison des dilatations différentielles entre les divers éléments de la turbomachine,

Plus particulièrement, le fourreau 12 comporte, d'amont en aval, une partie cylindrique 20, une partie annulaire s'étendant radialement 21 et une partie cylindrique 16. La partie cylindrique 20 présente une diamètre plus importante que la partie cylindrique 16. La partie cylindrique 16 est montée dans l'ouverture 5 de la paroi de fond et est fixée à ladite paroi de fond 4 par soudage ou brasage. La zone radialement interne de la partie radiale 21 comporte une surface d'appui aval venant en appui sur la paroi de fond 4.

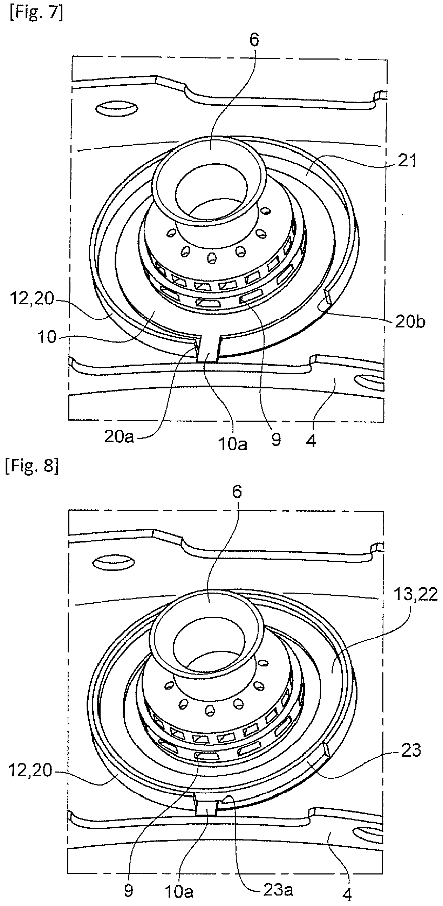

La partie cylindrique 20 s'étend sur une partie seulement de la circonférence. En particulier, le fourreau comporte un secteur angulaire dépourvu de partie cylindrique 20, comme cela est mieux visible à la figure 7, ce secteur angulaire s'étend ici sur 120°. Les extrémités circonférentielles 20a, 20b de la partie cylindrique 20 sont aptes à former des butées pour la patte 10a qui est logée dans ledit secteur angulaire dépourvu de partie cylindrique 20.

La bague de fermeture 13 présente une section générale en T, comportant une partie radiale 22 et une partie cylindrique 23 annulaires. L'extrémité aval de la partie cylindrique 23 vient en appui sur la partie radiale 21 du fourreau 12. Ladite partie radiale 21 du fourreau 12 et la partie radiale 22 de la bague de fermeture 23 sont ainsi écartées axialement l'une de l'autre et délimitent entre elle la gorge 11.

L'extrémité aval de la partie cylindrique 23 comporte une encoche 23a (figure 8) dont la fonction est expliquée après.

Un déflecteur 14 est par ailleurs monté en aval de la paroi de fond 4.

Le déflecteur 14 comporte, d'amont vers l'aval, une partie cylindrique 15, une partie radiale 24 présentant une forme de secteur d'anneau, et des rebords 25 s'étendant axialement vers l'aval au niveau des bords radialement interne et externe de la partie radiale 24. La partie cylindrique 15 est montée à l'intérieur de la partie cylindrique 16 du fourreau 12 et fixée par brasage ou soudage à ladite partie cylindrique 16.

La partie cylindrique 16 comporte en outre des rainures 26, ici au nombre de trois, régulièrement réparties sur la circonférence.

Le montage d'une telle chambre de combustion est réalisé de la manière suivante.

Le fourreau 12, en particulier la partie cylindrique 16, est tout d'abord monté dans l'ouverture 5 de la paroi de fond 4. Le déflecteur 14, en particulier la partie cylindrique 15, est montée dans la partie cylindrique 16 du fourreau. La partie cylindrique 16, la partie cylindrique 15 et la paroi de fond sont alors assemblées les unes aux autres par soudage ou brasage.

Le système d'injection est ensuite monté dans l'ouverture 5 de la paroi de fond, au travers du fourreau 12 et du déflecteur 14. En particulier, le système d'injection est positionné dans une première position angulaire de façon à ce que les ergots 18 du système d'injection 6 soit situés en regard des rainures 26 du déflecteur 14. Le système d'injection est ensuite déplacé en translation vers l'aval, jusqu'à ce que le rebord 10 soit en appui sur la partie radiale 21 du fourreau. Les ergots 18 sont alors situés juste en aval de la partie radiale 24 du déflecteur et la patte 10a est logée dans la zone du fourreau 12 dépourvue de rebord cylindrique 20.

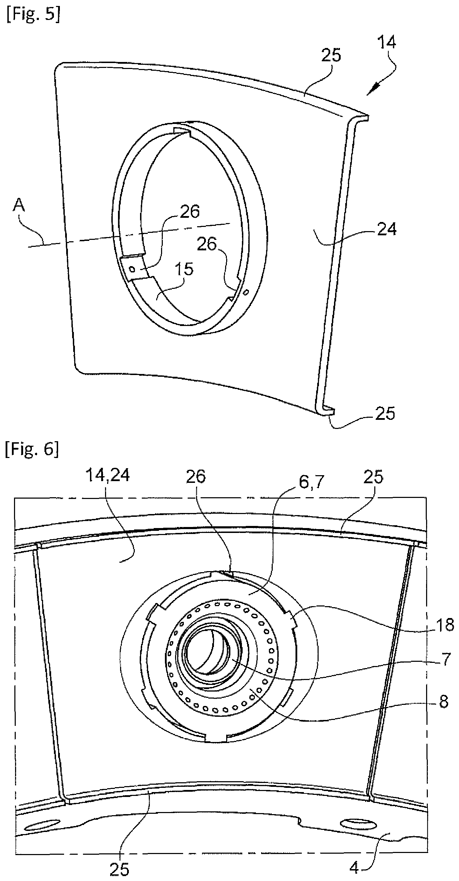

Le système d'injection 16 est ensuite pivoté dans une seconde position angulaire, illustrée aux figures 6 à 8. En particulier le système d'injection est pivoté d'un angle de 60° entre les première et seconde positions angulaires, cet angle correspondant à la moitié de l'écartement angulaire entre deux rainures 26 ou entre deux ergots 18.

Dans la seconde position angulaire, la patte 10a du système d'injection 6 vient en appui sur la butée circonférentielle 20a, de façon à faciliter le montage.

Dans la seconde position angulaire, les ergots 18 sont décalés des rainures 26 et sont aptes à venir en appui sur la partie radiale 24 du déflecteur 14, de façon à empêcher le déplacement axial du système d'injection 6.

La bague de fermeture 13 est montée dans la partie cylindrique 20 du fourreau 10, de façon à ce que la patte 10a soit logée et maintenue en position dans l'encoche 23a. La bague de fermeture 13 est ensuite fixée par soudage ou brasage au fourreau 12. Le système d'injection 6 est ainsi immobilisé en rotation.

Une telle structure permet d'assurer un montage simple de l'ensemble tout en empêchant le retrait du déflecteur 14 en cas de débrasage ou dessoudage de la partie cylindrique 15. On évite ainsi une dégradation des parties de la turbomachine qui sont situées en aval de la paroi de fond 4 ou de la chambre de combustion 1.

## Revendications

1. Chambre de combustion (1) de turbomachine, comportant
- une paroi de fond (4) comportant au moins une ouverture (5),
- au moins un fourreau (12) monté en amont de la paroi de fond (4) et fixé à la paroi de fond (4),
- une bague de fermeture (13) délimitant une gorge annulaire (11) avec le fourreau (12) et fixée au fourreau (12),
- au moins un système (6) d'injection d'air et de carburant, présentant un axe (A), monté dans l'ouverture (5) de la paroi de fond (4), le système d'injection (6) comprenant un rebord annulaire (10) s'étendant radialement par rapport audit axe (A), monté dans ladite gorge (11) avec un jeu radial,
- un déflecteur (14) situé en aval de la paroi de fond (4), fixé au fourreau (12) et/ou à la paroi de fond (4), comportant une partie radialement interne située axialement entre la paroi de fond (4) et une extrémité aval du système d'injection (6), le système d'injection (6) comportant au moins une partie en saillie (18) s'étendant radialement apte à être introduite dans une partie en creux (16) du déflecteur (14), ou inversement le déflecteur (14) comporte au moins une partie en saillie (18) s'étendant radialement apte à être introduite dans une partie en creux (16) du système d'injection (6), dans une première position angulaire de montage du système d'injection (6) par rapport au déflecteur (14), ladite partie en saillie (18) étant apte à venir axialement en butée sur une face radiale du déflecteur (14), ou respectivement du système d'injection (6), dans une seconde position angulaire de maintien du système d'injection (6) par rapport au déflecteur (14), ladite partie en saillie (18) étant décalée angulairement de la partie en creux (16) dans ladite seconde position.

2. Chambre de combustion (1) selon la revendication 1, **caractérisé en ce qu'**elle comporte des moyens de maintien en position (10a, 23a) aptes à maintenir le système d'injection (6) dans sa seconde position par rapport au déflecteur (14).

3. Chambre de combustion (1) selon la revendication 1, **caractérisée en ce que** la partie en saillie (18) s'étend radialement depuis l'extrémité aval du système d'injection (6), la partie en creux (16) étant formée dans le déflecteur (14).

4. Chambre de combustion (1) selon la revendication 1 ou 2, **caractérisée en ce que** le système d'injection (6) comporte une patte (10a) de blocage en rotation immobilisée en rotation par des butées circonférentielles (20a, 23a) du fourreau (12) et/ou de la bague de fermeture (13).

5. Chambre de combustion (1) selon la revendication 4, **caractérisée en ce que** le fourreau (12) comporte une première butée circonférentielle (20b) et une deuxième butée circonférentielle (20a), la patte de blocage en rotation (10a) étant apte à venir en appui sur la première butée circonférentielle (20b) dans la première position angulaire du système d'injection (6), la patte de blocage en rotation (10a) étant apte à venir en appui sur la deuxième butée circonférentielle (20a) dans la seconde position angulaire du système d'injection (6).

6. Chambre de combustion (1) selon la revendication 5, **caractérisée en ce que** la bague de fermeture (13) comporte une troisième butée circonférentielle (23a), la patte (10a) étant apte à être maintenue en position entre les deuxième et troisième butées circonférentielles (20a, 23a), de façon à maintenir le système d'injection (6) dans sa seconde position angulaire.

7. Chambre de combustion (1) selon l'une des revendications 1 à 5, **caractérisée en ce que** le fourreau (12) comporte une partie cylindrique radialement interne (16), montée dans l'ouverture (5) de la paroi de fond (4) et fixée à la périphérie de ladite ouverture (5).

8. Chambre de combustion (1) selon la revendication 6, **caractérisée en ce que** le déflecteur (14) comporte une partie cylindrique (15) montée dans la partie cylindrique radialement interne (16) du fourreau (12) et fixée à ladite partie cylindrique radialement interne (16).

9. Chambre de combustion (1) selon l'une des revendications 1 à 7, **caractérisée en ce que** le fourreau (12) comporte une partie cylindrique radialement externe (20), située axialement en amont de la partie cylindrique radialement interne (16), la bague de fermeture (13) étant montée radialement à l'intérieur de la partie cylindrique radialement externe (20).

10. Procédé de montage d'une chambre de combustion (1) selon l'une des revendications 1 à 9, **caractérisé en ce qu'**il comporte les étapes consistant à :
- fixer le fourreau (12) et le déflecteur (14) sur la paroi de fond (4),
- positionner le système d'injection (6) dans la première position angulaire et introduire le système d'injection (6) dans l'ouverture de la paroi de fond (4), au travers du fourreau (12) et du déflecteur (14), par translation suivant l'axe (A) du système d'injection (6) et de ladite ouverture (5), la partie en saillie (18) traversant la partie en creux (26)
- faire pivoter le système d'injection (6) dans sa seconde position angulaire de façon à ce que la partie en saillie (18) soit apte à former une butée axiale avec le déflecteur (14),
- monter la bague de fermeture (13) de façon à maintenir axialement le rebord annulaire (10) du système d'injection (6) dans la gorge (11) délimitée par la bague de fermeture (13) et le fourreau (12) et immobiliser en rotation le système d'injection (6).

## Patentansprüche

1. Brennkammer (1) für Turbomaschinen bzw. Turbotriebwerke, enthaltend
- eine Bodenwand (4) mit zumindest einer Öffnung (5),
- zumindest ein Mantelteil (12), das stromaufwärts der Bodenwand (4) angebracht und an die Bodenwand (4) befestigt ist,
- einen Verschlussring (13), der mit dem Mantelteil (12) eine ringförmige Nut (11) begrenzt und an das Mantelteil (12) befestigt ist,
- zumindest ein Einspritzsystem (6) zum Einleiten von Luft und Treibstoff, das eine Achse (A) aufweist und in der Öffnung (5) der Bodenwand (4) montiert ist, wobei das Einspritzsystem (6) eine ringförmige Randkante (10) aufweist, die sich in Bezug auf die Achse (A) radial erstreckt und mit radialem Spiel in der Nut (11) montiert ist,
- einen Abweiser (14), der sich stromabwärts der Bodenwand (4) befindet, an das Mantelteil (12) und/oder die Bodenwand (4) befestigt ist und einen radial inneren Abschnitt aufweist, der axial zwischen der Bodenwand (4) und einem stromabwärtigen Ende des Einspritzsystems (6) angeordnet ist,
wobei das Einspritzsystem (6) zumindest einen radial verlaufenden, vorspringenden Abschnitt (18) umfasst, der in einen vertieften Abschnitt (16) des Abweisers (14) eingeführt werden kann, oder umgekehrt der Abweiser (14) zumindest einen radial verlaufenden, vorspringenden Abschnitt (18) aufweist, der in einen vertieften Abschnitt (16) des Einspritzsystems (6) eingeführt werden kann, und zwar in einer ersten Winkelstellung bezüglich des Abweisers zum Montieren des Einspritzsystems (6), wobei der vorspringende Abschnitt (18) dazu geeignet ist, axial in Anschlag an einer radialen Fläche des Abweisers (14) bzw. des Einspritzsystems (6) zu gelangen, und zwar in einer zweiten Winkelstellung bezüglich des Abweisers (14) zum Halten des Einspritzsystems (6), wobei der vorspringende Abschnitt (18) in der zweiten Stellung winkelmäßig von dem vertieften Abschnitt (16) versetzt angeordnet ist.

2. Brennkammer (1) nach Anspruch 1,
**dadurch gekennzeichnet, dass** sie Stellungshaltemittel (10a, 23a) umfasst, die dazu geeignet sind, das Einspritzsystem (6) in seiner zweiten Stellung bezüglich des Abweisers (14) zu halten.

3. Brennkammer (1) nach Anspruch 1,
**dadurch gekennzeichnet, dass** sich der vorspringende Abschnitt (18) radial vom stromabwärtigen Ende des Einspritzsystems (6) ausgehend erstreckt, wobei der vertiefte Abschnitt (16) in dem Abweiser (14) ausgebildet ist.

4. Brennkammer (1) nach Anspruch 1 oder 2,
**dadurch gekennzeichnet, dass** das Einspritzsystem (6) eine Drehsicherungslasche (10a) aufweist, die durch umlaufende Anschläge (20a, 23a) des Mantelteils (12) und/oder des Verschlussrings (13) drehgesichert festgelegt ist.

5. Brennkammer (1) nach Anspruch 4,
**dadurch gekennzeichnet, dass** das Mantelteil (12) einen ersten umlaufenden Anschlag (20b) und einen zweiten umlaufenden Anschlag (20a) aufweist, wobei die Drehsicherungslasche (10a) in der ersten Winkelstellung des Einspritzsystems (6) an dem ersten umlaufenden Anschlag (20b) in Anlage gelangen kann und wobei die Drehsicherungslasche (10a) in der zweiten Winkelstellung des Einspritzsystems (6) an dem zweiten umlaufenden Anschlag (20a) in Anlage gelangen kann.

6. Brennkammer (1) nach Anspruch 5,
**dadurch gekennzeichnet, dass** der Verschlussring (13) einen dritten umlaufenden Anschlag (23a) aufweist, wobei die Lasche (10a) dazu geeignet ist, zwischen dem zweiten und dem dritten umlaufenden Anschlag (20a, 23a) in Stellung gehalten zu werden, um das Einspritzsystem (6) in seiner zweiten Winkelstellung zu halten.

7. Brennkammer (1) nach einem der Ansprüche 1 bis 5,
**dadurch gekennzeichnet, dass** das Mantelteil (12) einen radial inneren zylindrischen Abschnitt (16) aufweist, der in der Öffnung (5) der Bodenwand (4) angebracht und am Umfang der Öffnung (5) befestigt ist.

8. Brennkammer (1) nach Anspruch 6,
**dadurch gekennzeichnet, dass** der Abweiser (14) einen zylindrischen Abschnitt (15) aufweist, der in dem radial inneren zylindrischen Abschnitt (16) des Mantelteils (12) angebracht und an den radial inneren zylindrischen Abschnitt (16) befestigt ist.

9. Brennkammer (1) nach einem der Ansprüche 1 bis 7,
**dadurch gekennzeichnet, dass** das Mantelteil (12) einen radial äußeren zylindrischen Abschnitt (20) aufweist, der axial stromaufwärts des radial inneren zylindrischen Abschnitts (16) angeordnet ist, wobei der Verschlussring (13) radial innerhalb des radial äußeren zylindrischen Abschnitts (20) montiert ist.

10. Verfahren zum Montieren einer Brennkammer (1) nach einem der Ansprüche 1 bis 9,
**dadurch gekennzeichnet, dass** es die folgenden Schritte umfasst:
- Befestigen von Mantelteil (12) und Abweiser (14) an die Bodenwand (4),
- Positionieren des Einspritzsystems (6) in der ersten Winkelstellung und Einführen des Einspritzsystems (6) in die Öffnung der Bodenwand (4) durch das Mantelteil (12) und den Abweiser (14) hindurch mittels Verschiebung des Einspritzsystems (6) und der Öffnung (5) entlang der Achse (A), wobei der vorspringende Abschnitt (18) durch den vertieften Abschnitt (26) hindurchtritt,
- Verschwenken des Einspritzsystems (6) in seine zweite Winkelstellung, so dass der vorspringende Abschnitt (18) mit dem Abweiser (14) einen axialen Anschlag bilden kann,
- Montieren des Verschlussrings (13) so, dass die ringförmige Randkante (10) des Einspritzsystems (6) in der von dem Verschlussring (13) und dem Mantelteil (12) begrenzten Nut (11) axial gehalten wird, und Drehsichern des Einspritzsystems (6).

## Claims

1. Combustion chamber (1) for a turbomachine, comprising
- a bottom wall (4) comprising at least one opening (5),
- at least one sleeve (12) mounted upstream of the bottom wall (4) and fixed to the bottom wall (4),
- a closing ring (13) defining an annular groove (11) with the sleeve (12) and fixed to the sleeve (12),
- at least one air and fuel injection system (6), having an axis (A), mounted in the opening (5) of the bottom wall (4), the injection system (6) comprising an annular flange (10) extending radially with respect to said axis (A), mounted in said groove (11) with a radial clearance,
- a baffle (14) situated downstream of the bottom wall (4), fixed to the sleeve (12) and/or to the bottom wall (4), comprising a radially internal part situated axially between the bottom wall (4) and a downstream end of the injection system (6),
the injection system (6) comprising at least one projecting part (18) extending radially, capable of being introduced into a recessed part (16) of the baffle (14), or conversely the baffle (14) comprising at least one projecting part (18) extending radially, capable of being introduced into a recessed part (16) of the injection system (6), in a first angular mounting position of the injection system (6) with respect to the baffle (14), said projecting part (18) being capable of coming axially into abutment on a radial face of the baffle (14), or respectively, of the injection system (6), in a second angular position for holding the injection system (6) with respect to the baffle (14), said projecting part (18) being angularly offset from the recessed part (16) in said second position.

2. Combustion chamber (1) according to claim 1, **characterised in that** it comprises position-holding means (10a, 23a) capable of holding the injection system (6) in its second position with respect to the baffle (14).

3. Combustion chamber (1) according to claim 1, **characterised in that** the projecting part (18) extends radially from the downstream end of the injection system (6), the recessed part (16) being formed in the baffle (14).

4. Combustion chamber (1) according to claim 1 or 2, **characterised in that** the injection system (6) comprises a rotation blocking lug (10a) immobilised in rotation by circumferential stops (20a, 23a) of the sleeve (12) and/or of the closing ring (13).

5. Combustion chamber (1) according to claim 4, **characterised in that** the sleeve (12) comprises a first circumferential stop (20b) and a second circumferential stop (20a), the rotation blocking lug (10a) being able to come to rest on the first circumferential stop (20b) in the first angular position of the injection system (6), the rotation blocking lug (10a) being able to come to rest on the second circumferential stop (20a) in the second angular position of the injection system (6).

6. Combustion chamber (1) according to claim 5, **characterised in that** the closing ring (13) comprises a third circumferential stop (23a), the lug (10a) being able to be held in position between the second and third circumferential stops (20a, 23a), so as to hold the injection system (6) in its second angular position.

7. Combustion chamber (1) according to one of claims 1 to 5, **characterised in that** the sleeve (12) comprises a radially inner cylindrical portion (16), mounted in the opening (5) of the bottom wall (4) and fixed to the periphery of said opening (5).

8. Combustion chamber (1) according to claim 6, **characterised in that** the baffle (14) comprises a cylindrical portion (15) mounted in the radially inner cylindrical portion (16) of the sleeve (12) and fixed to said radially inner cylindrical portion (16).

9. Combustion chamber (1) according to one of claims 1 to 7, **characterised in that** the sleeve (12) comprises a radially external cylindrical portion (20), situated axially upstream of the radially internal cylindrical portion (16), the closing ring (13) being mounted radially inside the radially external cylindrical portion (20).

10. Method for assembling a combustion chamber (1) according to one of claims 1 to 9, **characterised in that** it includes the following steps:
- fixing the sleeve (12) and the baffle (14) to the bottom wall (4),
- positioning the injection system (6) in the first angular position and introducing the injection system (6) into the opening in the bottom wall (4) through the sleeve (12) and the baffle (14) by translation along the axis (A) of the injection system (6) and said opening (5), the projecting part (18) crossing the recessed part (26),
- pivoting the injection system (6) in its second angular position so that the projecting part (18) is able to form an axial stop with the baffle (14)
- mounting the closing ring (13) so as to hold the annular flange (10) of the injection system (6) in the groove (11) delimited by the closing ring (13) and the sleeve (12) and immobilise the injection system (6) against rotation.
